# EUROPEAN PATENT SPECIFICATION

(11) **EP 2 532 724 B1**
(45) Date of publication and mention of the grant of the patent: **04.09.2019**
(21) Application number: 11736743.3
(22) Date of filing: 17.01.2011
(51) Int. Cl.: C09J 7/26, C09J 183/04, C08L 83/04

(54) **DOUBLE-FACED ADHESIVE TAPE AND PROCESS FOR PRODUCING SAME**
DOPPELSEITIGES KLEBEBAND UND HERSTELLUNGSVERFAHREN DAFÜR
BANDE ADHÉSIVE DOUBLE FACE ET SON PROCÉDÉ DE PRODUCTION

(30) Priority: 01.02.2010 JP 2010020473
(43) Date of publication of application: 12.12.2012
(73) Proprietor: Nitto Denko Corporation, Osaka 567-8680 (JP)
(72) Inventor: KIGAMI, Hiroki, Ibaraki-shi Osaka 567-8680 (JP); FURUTA, Yoshihisa, Ibaraki-shi Osaka 567-8680 (JP)
(74) Representative: Intès, Didier Gérard André
(86) International application number: PCT/JP2011/000202
(87) International publication number: WO 2011/093026

(56) References cited:
- EP-A2- 1 270 697
- WO-A2-03/000814
- JP-A- 1 085 273
- JP-A- 2 233 789
- JP-A- 9 154 933
- JP-A- 9 157 607
- JP-A- 10 022 325
- JP-A- 10 154 777
- JP-A- 10 163 712
- JP-A- 2000 017 240
- JP-A- 2000 106 372
- JP-A- 2001 031 917
- JP-A- 2001 352 171
- JP-A- 2003 321 659
- JP-A- 2004 253 476
- JP-A- 2005 002 335
- JP-A- 2005 243 706
- JP-A- 2005 325 283
- JP-A- 2009 167 271

## Description

### TECHNICAL FIELD

The present invention relates to a method for producing a double-sided adhesive tape having a polytetrafluoroethylene (PTFE) porous film substrate and adhesive layers formed respectively on both sides of the substrate.

### BACKGROUND ART

Double-sided adhesive tapes in which a nonwoven fabric is used as a substrate (support body) are widely used in various industrial fields, such as household electrical appliances, automobiles, and office automation apparatuses, as joining means that have excellent workability and highly reliable adhesion.

In many cases, the double-sided adhesive tapes are required to have the property of following the surface shape (such as unevenness and curve) of an adherend well (which can be also interpreted as high adhesion to a curved surface or low repulsion), in accordance with the forms of usage in the above-mentioned applications. This is because when lacking the following property, the double-sided adhesive sheets tend to suffer lifting, peeling, etc. at a joint portion in the case where they are used for attachment to an adherend, such as a vehicle interior material, that has a complex surface shape.

Examples of the substrate used for producing the double-sided adhesive tapes include: a nonwoven fabric substrate composed of a natural fiber such as a wood fiber, cotton and Manila hemp; a nonwoven fabric substrate composed of a chemical fiber such as rayon, an acetate fiber, a polyester fiber, a polyvinyl alcohol (PVA) fiber, a polyamide fiber, a polyolefin fiber and a polyurethane fiber; and a nonwoven fabric substrate composed of two or more kinds of different-material fibers in combination. An acrylic adhesive composition was mainly used as an adhesive composition used for producing the double-sided adhesive tapes in which these nonwoven fabrics were used as the substrate. In recent years, however, since the double-sided adhesive tapes are required to be usable also under severer conditions, a double-sided adhesive tape in which a silicone adhesive composition with excellent heat resistance and cold resistance is used has been studied. Furthermore, there has been studied a double-sided adhesive tape in which a PTFE porous film is used as a substrate that does not deteriorate the characteristics of the silicone adhesive composition and that has flexibility and excellent heat resistance, cold resistance, weatherability and chemical resistance.

As a conventional method for producing a double-sided adhesive tape, there has been mainly used a method in which an adhesive composition is applied to a release liner and dried, and thereafter the release liner is bonded to one main surface of a substrate so that an adhesive layer is formed (transfer process), and an adhesive composition is applied directly to another main surface of the substrate and dried.

However, in a double-sided adhesive tape in which a PTFE porous film is used as the substrate, the adhesive strength (anchoring strength) between the PTFE porous film and the adhesive layer on the side formed by the transfer process is insufficient in some cases.

Patent Literature 1 discloses a sheet for IC chip adhesion characterized by that adhesive resin layers are formed respectively on both sides of a porous PTFE layer consisting of a porous PTFE sheet, the porous PTFE layer keeps porous voids, and the adhesive resin layers consist of a bromine-free flame retardant resin composition. Patent Literature 1 further describes, as a method for producing the sheet for IC chip adhesion, that the porous PTFE sheet is used as a substrate, and the porous PTFE sheet is coated with an adhesive resin or laminated with an adhesive resin sheet.

In some cases, however, the adhesive strength (anchoring strength) between the PTFE porous film and each adhesive layer in the sheet disclosed in Patent Literature 1 is not sufficient enough when the sheet is used as a double-sided adhesive tape. Moreover, the substrate ruptures from the porous void portions at the time of peeling in some cases.

### CITATION LIST

### Patent Literature

PTL 1: JP 2003-003134 A
PTL 2: WO 03000814 A2

### SUMMARY OF INVENTION

### Technical Problem

In view of the above-mentioned problems, the present invention is intended to provide a double-sided adhesive tape in which the adhesive strength between the substrate and each adhesive layer is high and the rupture of the substrate is unlikely to occur.

### Solution to Problem

The present invention is a method for producing a double-sided adhesive tape having a PTFE porous film substrate and adhesive layers formed respectively on both sides of the substrate.

More precisely, the invention is defined in claim 1 and the dependent claims.

The step (4) may further include the following step (4C):
(4C) the step of bonding a second release liner to the second adhesive layer.

Preferably, the adhesive compositions each contain a silicone adhesive.

The present invention is also a double-sided adhesive tape including a PTFE porous film substrate, a first adhesive layer formed on one main surface of the substrate, and a second adhesive layer formed on another main surface of the substrate. The first adhesive layer and the second adhesive layer are connected to each other inside pores of the substrate.

Preferably, the double-sided adhesive tape according to the present invention further includes at least one release liner. Preferably, the first adhesive layer and the second adhesive layer each contain a silicone adhesive.

### Advantageous Effects of Invention

The present invention provides a double-sided adhesive tape in which an adhesive strength between the substrate and each adhesive layer is high and the rupture of the substrate is unlikely to occur.

### BRIEF DESCRIPTION OF THE DRAWINGS

FIG. 1 is a diagram showing one embodiment of the double-sided adhesive tape according to the present invention.
FIG. 2 is a diagram showing another embodiment of the double-sided adhesive tape according to the present invention.
FIG. 3 is an enlarged cross-sectional photograph of the double-sided adhesive tape produced in Example 1.
FIG. 4 is an enlarged cross-sectional photograph of the double-sided adhesive tape produced in Comparative Example 1.

### DESCRIPTION OF EMBODIMENTS

First, the production method according to the present invention is described in detail. The present invention is a method for producing a double-sided adhesive tape having a PTFE porous film substrate and adhesive layers formed respectively on both sides of the substrate. The method includes the following steps (1) to (4) in order:
(1) the step of putting an adhesive composition on a first release liner;
(2) the step of bonding the first release liner on which the adhesive composition has been put to one main surface of the PTFE porous film substrate;
(3) the step of forming a first adhesive layer by heating the substrate to which the first release liner has been bonded; and
(4) the step of providing a second adhesive layer on another main surface of the substrate, a part of an adhesive in the second adhesive layer being penetrated into the substrate.

The PTFE porous film serving as the substrate can be produced by a known method, and it also is available as a commercialized product. As the PTFE porous film, a PTFE porous film having a pore diameter of 0.1 µm to 3.0 µm is used. A pore diameter of less than 0.1 µm may make it difficult for the adhesive composition to permeate into the pores. A pore diameter exceeding 3.0 µm may cause the adhesive composition to pass through to the other side of the substrate. In some cases, the adhesive composition that has passed through to the other side of the substrate soils a roll used for the production and affects the putting of the adhesive composition on the other side of the substrate. The PTFE porous film has a thickness of 10 µm to 100 µm. A thickness less than 10 µm may cause the adhesive composition to pass through to the other side of the substrate. A thickness exceeding 100 µm may not allow the adhesive layers formed respectively on both sides of the substrate to be connected to each other inside the pores of the substrate, making it impossible to obtain the effects of the present invention. The PTFE porous film has a porosity of 40 to 99%. A porosity of less than 40% may cause the adhesive composition not to penetrate sufficiently into the pores.

Usually, the adhesive composition contains an adhesive component and a solvent that is volatilized by being heated. From the viewpoint of heat resistance and cold resistance, the adhesive composition containing a silicone adhesive is to be used.

The silicone adhesive is not particularly limited, and a known silicone adhesive, such as a peroxide-crosslinking type silicone adhesive (peroxide-curing type silicone adhesive) and an addition-reaction type silicone adhesive, can be used. Among them, the addition-reaction type silicone adhesive can be used suitably.

Specific examples of the addition-reaction type silicone adhesive include an addition-reaction type silicone adhesive containing a silicone rubber and a silicone resin, and further containing, as needed, an additive such as a crosslinking agent, a filler, a plasticizer, an age resistor, an antistatic agent, and a colorant (such as a pigment and a dye). A product named "SD4584" (manufactured by Dow Corning Toray Co., Ltd.) is available as a commercialized product.

The silicone rubber is not particularly limited as long as it is a silicone-based rubber component. A silicone rubber containing organopolysiloxane having a phenyl group (particularly, organopolysiloxane containing methylphenylsiloxane as a main constitutional unit) is suitable. Various functional groups, such as a vinyl group, may be introduced into the organopolysiloxane in such a silicone rubber, as needed.

The silicone resin is not particularly limited as long as it is a silicone-based resin used in a silicone adhesive. Examples thereof include a silicone resin containing organopolysiloxane composed of a (co-)polymer having at least one unit selected from the group consisting of a unit composed of a constitutional unit "R₃Si_{1/2}", a unit composed of a constitutional unit "SiO₂", a unit composed of a constitutional unit "RSiO_{3/2}", and a unit composed of a constitutional unit "R₂SiO". R in these constitutional units denotes a hydrocarbon group or a hydroxyl group.

The release liner may be a release liner commonly used for double-sided adhesive tapes, and selected appropriately depending on the type of the adhesive composition.

The step (1) can be performed by putting the adhesive composition on the first release liner by a known method. Typically, application of the adhesive composition is performed as the method of putting the adhesive composition. The application of the adhesive composition can be performed with, for example, a conventional coater such as a gravure roll coater, a reverse roll coater, a kiss roll coater, a dip roll coater, a bar coater, a knife coater and a spray coater. The amount of the adhesive composition to be applied (here, it refers to the amount of the adhesive composition to be applied per adhesive layer provided on one side of the substrate) is not particularly limited. For example, it is an amount that allows the adhesive layer to be formed with a thickness of about 20 to 150 µm (preferably about 40 to 100 µm) in terms of solid content in the adhesive. The preferable lower limit of the amount of the adhesive composition to be applied can vary depending on the properties of the substrate to be used.

Conventionally, the adhesive composition is put on the release liner in the step (1) and then subsequently is heated and dried, and thereafter the release liner is bonded to the substrate. In the present invention, however, the release liner is bonded to the substrate before the adhesive composition is dried. The release liner is bonded to the substrate with the adhesive composition being undried, so that the adhesive component enters into the pores of the PTFE porous film serving as the substrate and fills the pores. Thereby, high anchoring strength is obtained, and the adhesion between the substrate and the adhesive layer is increased. Moreover, the adhesive that has entered into the pores of the substrate enhances the strength of the substrate, and the rupture of the substrate is unlikely to occur at the time of peeling of the double-sided adhesive tape.

The step (2) can be performed by bonding the surface of the release liner on which the adhesive composition has been put to the one main surface of the substrate by a known method. At this time, a pressure may be applied appropriately.

The step (3) can be performed by a known method. The heating dries the adhesive composition to form the adhesive layer. In the case where the adhesive composition contains a silicone adhesive, not only the adhesive composition is dried but also the adhesive is cured. The heating temperature and heating time may be determined appropriately depending on the type of the adhesive composition. In the case where the adhesive composition contains a silicone adhesive, the heating temperature preferably is 130°C or higher, and more preferably 150°C or higher.

In the step (4), the second adhesive layer is provided so that a part of the adhesive in the second adhesive layer is penetrated into the pores of the PTFE porous film serving as the substrate. Preferably the step (4) is performed by carrying out the following steps (4A) and (4B):
(4A) the step of putting an adhesive composition on the another main surface of the substrate; and
(4B) the step of forming the second adhesive layer by heating the substrate on which the adhesive composition has been put.
   The step (4A) can be performed by a known method. The adhesive composition may be the same as or different from the adhesive composition put on the one main surface of the substrate. Preferably, application of the adhesive composition is performed as the method of putting the adhesive composition because it allows the adhesive to enter into the pores of the substrate easily. As a specific applying method, there can be mentioned an applying method in which the coater described in the step (1) is used.
   The step (4B) can be performed by a known method. The heating temperature, heating time, and the like may be determined appropriately depending on the type of the adhesive composition.
   The step (4) may further include the following step (4C). The step (4C) can be performed by a known method.
(4C) The step of bonding a second release liner to the second adhesive layer.

The step (4) can be performed also by applying the adhesive composition to the second release liner, bonding the second release liner to which the adhesive composition has been applied to the another main surface of the substrate, and heating the substrate.

In the production method according to the present invention, a step other than the steps (1) to (4) may be performed somewhere between the step (1) and the step (4) as long as the steps (1) to (4) are performed in order.

In the case where a PTFE porous film (sheet) having a large width is used as the substrate, the step of cutting it into a desired width may be performed additionally.

When the double-sided adhesive tape having the PTFE porous film substrate and the adhesive layers formed respectively on both sides of the substrate is produced by such a method, the adhesive compositions enter into the pores from the respective sides of the substrate while pushing out the air, so that the adhesive layers are joined to each other. Thus, the obtained double-sided adhesive tape has a characteristic that the first adhesive layer and the second adhesive layer are connected to each other inside the pores of the substrate. It also is possible to obtain a double-sided adhesive tape in which the adhesive layers fill all of the pores of the substrate. By entering into the substrate deeply enough to be connected to each other as described above, the first adhesive layer and the second adhesive layer behave as one adhesive layer, enhancing the adhesion between the substrate and the adhesive layer. Moreover, the strength of the substrate is enhanced, and the rupture of the substrate is unlikely to occur at the time of peeling of the double-sided adhesive tape.

Therefore, in another aspect, the present invention is a double-sided adhesive tape including a PTFE porous film substrate, a first adhesive layer formed on one main surface of the substrate, and a second adhesive layer formed on another main surface of the substrate. The first adhesive layer and the second adhesive layer are connected to each other inside pores of the substrate.

The double-sided adhesive tape may further include at least one release liner.

Details of the substrate, the adhesive layers and the release liner are as described above. Preferably, the first adhesive layer and the second adhesive layer each contain a silicone adhesive. Preferably, the first adhesive layer and the second adhesive layer fill more than 90 volume% of the pores of the substrate because the rupture of the substrate is further unlikely to occur in that case. More preferably, the first adhesive layer and the second adhesive layer fill all of the pores of the substrate.

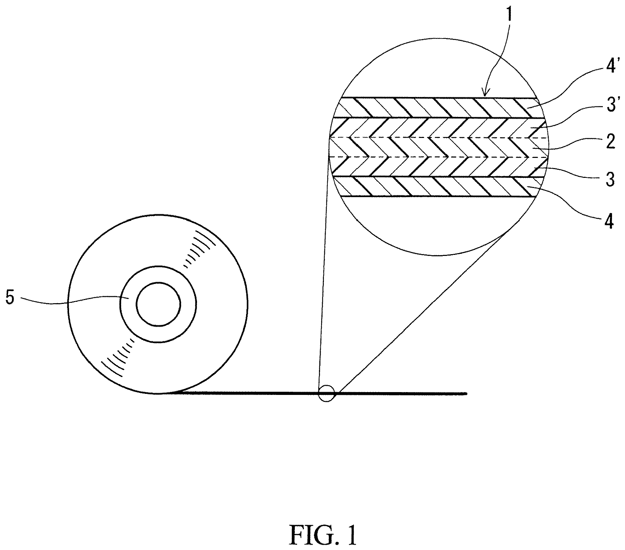

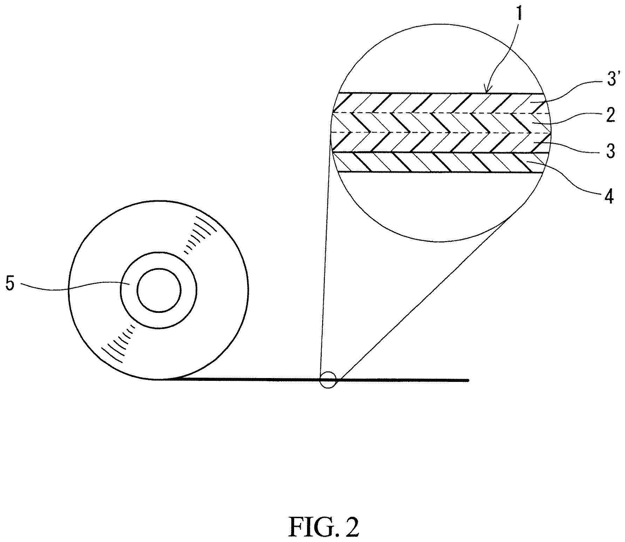

FIG. 1 and FIG. 2 each show a structural example of the double-sided adhesive tape according to the present invention. In FIG. 1 and FIG. 2, a part of the double-sided adhesive tape is enlarged in a circle.

In a double-sided adhesive tape 1 in FIG. 1, a first adhesive layer 3 and a second adhesive layer 3' are formed respectively on both main surfaces of a PTFE porous film substrate 2. A first release liner 4 and a second release liner 4' are provided further on the first adhesive layer 3 and the second adhesive layer 3', respectively, to protect the respective adhesive layers. The double-sided adhesive tape 1 thus structured is wound around a core material 5.

In the double-sided adhesive tape 1 in FIG. 2, the first adhesive layer 3 and the second adhesive layer 3' are formed respectively on both main surfaces of the PTFE porous film substrate 2, and the release liner 4 only is provided on the first adhesive layer 3. The release liner 4 is releasably treated on both sides. When the double-sided adhesive tape 1 is wound around the core material 5, the second adhesive layer 3' is in contact with the release liner 4 and protected. Thus, the first adhesive layer 3 and the second adhesive layer 3' are protected by the single release liner 4.

In FIG. 1 and FIG. 2, each interface between the substrate and each adhesive layer is indicated by a dotted line for convenience. Actually, however, a part of each adhesive layer is penetrated into the pores of the substrate.

In the double-sided adhesive tape according to the present invention, the adhesion between the substrate and each adhesive layer is high, and the rupture of the substrate is unlikely to occur at the time of peeling of the double-sided adhesive tape.

### Examples

Hereinafter, the present invention is described in detail with reference to Examples and Comparative Examples, but the present invention is not limited to these examples.

### Example 1

0.9 parts by weight of a product named "SRX212" (a platinum-type curing catalyst manufactured by Dow Corning Toray Co., Ltd.) was mixed with 100 parts by weight of a product named "SD4584" (an addition-reaction type silicone adhesive manufactured by Dow Corning Toray Co., Ltd.) to prepare a silicone adhesive composition.

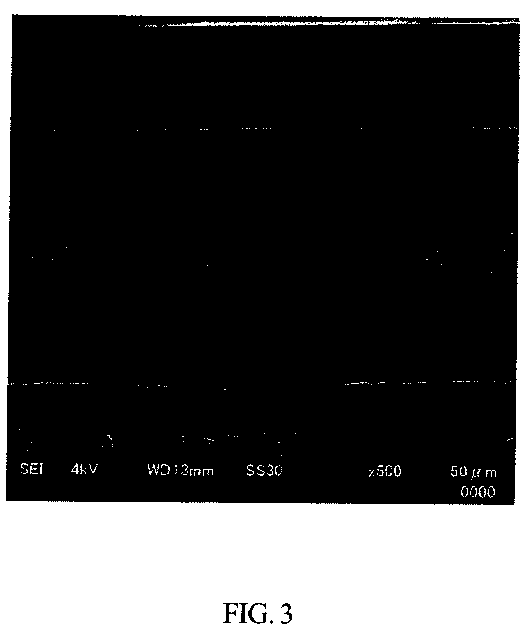

This silicone adhesive composition was applied to a releasably-treated surface of a release liner obtained by treating a polyethylene terephthalate (PET) film with a fluorinated silicone release agent so that the silicone adhesive composition had a thickness of 50 µm after being dried. Thus, the release liner having a silicone adhesive composition layer was obtained. Before the adhesive composition layer was dried, a PTFE porous film having a thickness of 20 µm and an average pore diameter of 0.6 µm was bonded to the adhesive composition layer of the release liner. Subsequently, this was heated at 150°C for 3 minutes so that an adhesive layer was formed. Next, the silicone adhesive composition was applied to the surface of the PTFE porous film opposite to the surface to which the release liner had been bonded so that the silicone adhesive composition had a thickness of 30 µm after being dried. This was heated at 130°C for 3 minutes, and a release liner similar to the one mentioned above was bonded thereto. Thus, a double-sided adhesive tape was produced. FIG. 3 shows an enlarged cross-sectional photograph of this double-sided adhesive tape.

### Example 2

The silicone adhesive composition in Example 1 was applied to a releasably-treated surface of a release liner obtained by treating a PET film with a fluorinated silicone release agent so that the silicone adhesive composition had a thickness of 80 µm after being dried. Thus, a release liner having a silicone adhesive composition layer was obtained. Before the adhesive composition layer was dried, a PTFE porous film having a thickness of 50 µm and an average pore diameter of 3 µm was bonded to the adhesive composition layer of the release liner. Subsequently, this was heated at 150°C for 3 minutes so that an adhesive layer was formed. Next, the silicone adhesive composition was applied to the surface of the PTFE porous film opposite to the surface to which the release liner had been bonded so that the silicone adhesive composition had a thickness of 30 µm after being dried. This was heated at 130°C for 3 minutes, and a release liner similar to the one mentioned above was bonded thereto. Thus, a double-sided adhesive tape was produced.

### Comparative Example 1

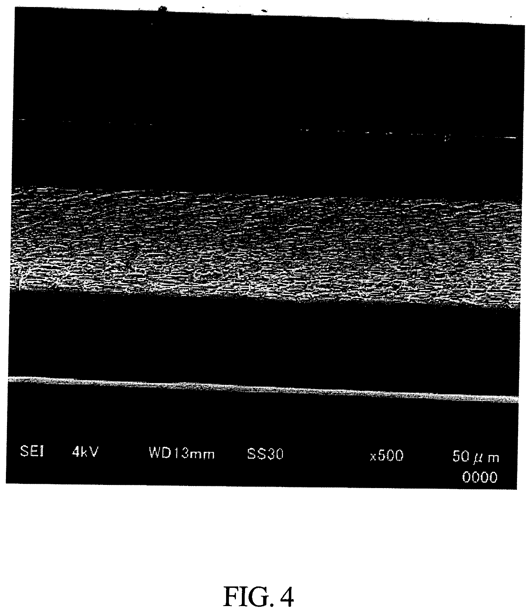

The silicone adhesive composition in Example 1 was applied to a releasably-treated surface of a release liner obtained by treating a PET film with a fluorinated silicone release agent so that the silicone adhesive composition had a thickness of 30 µm after being dried. This was heated at 150°C for 3 minutes so that an adhesive layer was formed. A PTFE porous film having a thickness of 20 µm and an average pore diameter of 0.6 µm was bonded to the adhesive layer of the release liner. Separately, the silicone adhesive composition in Example 1 was applied to a releasably-treated surface of a release liner obtained by treating a PET film with a fluorinated silicone release agent so that the silicone adhesive composition had a thickness of 30 µm after being dried. This was heated at 150°C for 3 minutes so that an adhesive layer was formed. To the surface of the PTFE porous film opposite to the surface to which the release liner had been bonded, the adhesive layer of this separately-obtained release liner was bonded. Thus, a double-sided adhesive tape was produced. FIG. 4 shows an enlarged cross-sectional photograph of this double-sided adhesive tape.

### Comparative Example 2

The silicone adhesive composition in Example 1 was applied to a releasably-treated surface of a release liner obtained by treating a PET film with a fluorinated silicone release agent so that the silicone adhesive composition had a thickness of 30 µm after being dried. This was heated at 150°C for 3 minutes so that an adhesive layer was formed. A PTFE porous film having a thickness of 20 µm and an average pore diameter of 0.6 µm was bonded to the adhesive layer of the release liner. The silicone adhesive composition was applied to the surface of the PTFE porous film opposite to the surface to which the release liner had been bonded so that the silicone adhesive composition had a thickness of 30 µm after being dried. This was heated at 130°C for 3 minutes, and a release liner similar to the one mentioned above was bonded thereto. Thus, a double-sided adhesive tape was produced.

### Comparative Example 3

Adhesive layers were provided respectively on both sides of a PTFE porous film having a thickness of 50 µm and an average pore diameter of 0.1 µm by using a product named "SAFV" (an epoxy resin adhesive sheet produced by Nikkan Industries Co., Ltd.). Release liners were further provided respectively on both sides thereof. This was pressed under the conditions in which the temperature was 130°C, the pressure was 3 kg/cm² and the pressing time was 3 minutes, with a hot press apparatus. Thus, a double-sided adhesive tape was produced.

The double-sided adhesive tapes produced in Examples and Comparative Examples were evaluated as follows. Table 1 shows the results thereof.

### (Adhesive strength measurement)

The release liner protecting one surface of each double-sided adhesive tape described above was stripped off to expose the adhesive layer, and the double-sided adhesive tape was bonded to a PET film having a thickness of 25 µm to be backed therewith. This backed adhesive tape was cut into a size of 20 mm in width and 100 mm in length to prepare a specimen. The specimen was pressure-bonded to a SUS plate serving as an adherend by one reciprocating movement of a 2 kg roller.

This was left at 23°C for 30 minutes, and then measured for adhesive strength (N/20 mm width) in accordance with JIS Z0237, in a measurement environment in which the temperature was 23°C and the relative humidity was 50%, under the conditions in which the pulling rate was 300 mm/minute and the peeling angle was 180°, using a tensile tester. It should be noted that in Comparative Example 3, since the double-sided adhesive tape exhibited no adhesion to the SUS plate at normal temperature, the double-sided adhesive tape was pressed, with a hot press apparatus, on the SUS plate under the conditions in which the temperature was 170°C, the pressure was 5 kg/cm² and the pressing time was 1 minute so as to be used for the measurement.

### (State of peeling)

After the adhesive strength measurement, the state of the double-sided adhesive tape used was observed visually to make a visual check on whether the double-sided adhesive tape was peeled off from the interface between the SUS plate surface and (the adhesive layer of) the double-sided tape. Thereby, the double-sided tape was evaluated into the following two categories.
○: The peeling occurred from the interface between the SUS plate surface and the double-sided tape.
×: No peeling occurred from the interface between the SUS plate surface and the double-sided tape.

In addition, the specimens in which no peeling occurred from the interface between the SUS plate surface and the double-sided tape were evaluated into the following three categories in terms of whether the PTFE porous film substrate was ruptured or not.
○: No rupture of the substrate was observed.
Δ: Rupture of the substrate was observed in a partial area of the double-sided adhesive sheet used.
×: The rupture of the substrate was observed in almost the entire area of the double-sided adhesive sheet used.

The specimens in which no rupture of the substrate was observed were checked visually in terms of presence/absence of adhesive deposit on the SUS plate surface, and evaluated into the following two categories.
○: No adhesive deposit was observed.
× : Adhesive deposit was observed.

**[Table 1]**

| | Example 1 | Example 2 | C. Example 1 | C. Example 2 | C. Example 3 |
|---|---|---|---|---|---|
| Adhesive strength [N/20 mm] | 12.7 | 15.3 | 1.2 | 1.2 | 3.5 |
| Peeling from interface | ○ | ○ | × | × | × |
| Rupture of substrate | - | - | ○ | ○ | Δ |
| Adhesive deposit | - | - | × | × | - |

As shown in Table 1, the double-sided adhesive tapes in Examples 1 and 2 produced in such a manner that the adhesive composition was penetrated into the PTFE porous film substrate from both sides of the substrate were able to be peeled off without the rupture of the substrate and the adhesive deposit. Observation on the cross-section of the double-sided adhesive tape in Example 1 (FIG. 3) revealed that the adhesive layers formed respectively on both surfaces of the substrate were connected to each other inside the pores of the substrate. In contrast, in the double-sided adhesive tapes in Comparative Examples 1 and 2 produced by the process (transfer process) in which the adhesive composition was applied to the release liner and dried and thereafter the release liner was bonded to the PTFE porous film substrate, the adhesive was separated from the substrate and the adhesive deposit was observed. This indicates that the adhesive strength between the substrate and the adhesive layer was low in the double-sided adhesive tapes in Comparative Examples 1 and 2. In the double-sided adhesive tape in Comparative Example 3 obtained by bonding the adhesive layers to the PTFE porous film substrate by hot pressing, the rupture of the substrate was observed. Observation on the cross-section of the double-sided adhesive tape in Comparative Example 1 (FIG. 4) revealed that the adhesive layers formed respectively on both surfaces of the substrate were not penetrated into the pores of the substrate almost at all.

### Industrial Applicability

The double-sided adhesive tape obtained by the production method according to the present invention and the double-sided adhesive tape according to the present invention can be used in various industrial fields such as household electrical appliances, automobiles, and office automation apparatuses.

## Claims

1. A method for producing a double-sided adhesive tape having a polytetrafluoroethylene porous film substrate and adhesive layers formed respectively on both sides of the substrate, the method being **characterized in that** it comprises the following steps (1) to (4) in order:
(1) the step of putting an adhesive composition on a first release liner (4);
(2) the step of bonding the first release liner (4) on which the adhesive composition has been put to one main surface of the polytetrafluoroethylene porous film substrate (2);
(3) the step of forming a first adhesive layer (3) by heating the substrate to which the first release liner (4) has been bonded; and
(4) the step of providing a second adhesive layer (3') on another main surface of the substrate (2), a part of an adhesive in the second adhesive layer (3') being penetrated into the substrate (2),wherein the step (4) includes the following steps (4A) and (4B):
(4A) the step of putting an adhesive composition on the another main surface of the substrate (2); and
(4B) the step of forming the second adhesive layer (3') by heating the substrate (2) on which the adhesive composition has been put,
wherein the adhesive composition put on the first release liner (4) is maintained in an undried state from an end of the step (1) to a beginning of the step (2),
the adhesive compositions each contain a silicone adhesive, and
the polytetrafluoroethylene porous film substrate (2) has an average pore diameter of 0.1 to 3 µm, a thickness of 10 to 100 µm, and a porosity of 40 to 99%.

2. The production method according to claim 1, wherein the step (4) further includes the following step (4C):
(4C) the step of bonding a second release liner (4') to the second adhesive layer (3').

3. The production method according to any one of claims 1 to 2, wherein the heating temperature in the step (3) is 130°C or higher.

4. The production method according to any one of claims 1 to 3, wherein each of the first adhesive layer (3) and the second adhesive layer (3') has a thickness of 20 to 150 µm.

## Patentansprüche

1. Verfahren für die Herstellung eines doppelseitigen Klebebands, das ein poröses Polytetrafluorethylenfoliensubstrat und Klebstoffschichten, die jeweils auf beiden Seiten des Substrats gebildet sind, aufweist, wobei das Verfahren **dadurch gekennzeichnet ist, dass** es die folgenden Schritte (1) und (4) in dieser Reihenfolge umfasst:
(1) den Schritt des Aufgebens einer Klebstoffzusammensetzung auf ein erstes Trennpapier (4),
(2) den Schritt des Bondierens des ersten Trennpapiers (4), auf das die Klebstoffzusammensetzung aufgegeben worden ist, auf eine Hauptfläche des porösen Polytetrafluorethylenfoliensubstrats (2),
(3) den Schritt des Bildens einer ersten Klebstoffschicht (3) durch Erhitzen des Substrats, auf das das erste Trennpapier (4) bondiert worden ist, und
(4) den Schritt des Bereitstellens einer zweiten Klebstoffschicht (3') auf einer anderen Hauptfläche des Substrats (2), wobei ein Teil eines Klebstoffs in der zweiten Klebstoffschicht (3') in das Substrat (2) eindringt, wobei der Schritt (4) die folgenden Schritte (4A) und (4B) umfasst:
(4A) den Schritt des Aufgebens einer Klebstoffzusammensetzung auf eine andere Hauptfläche des Substrats (2) und
(4B) den Schritt des Bilden der zweiten Klebstoffschicht (3') durch Erhitzen des Substrats (2), auf das die Klebstoffzusammensetzung aufgegeben worden ist,
wobei die Klebstoffzusammensetzung, die auf das erste Trennpapier (4) aufgegeben worden ist, in einem ungetrockneten Zustand von einem Ende des Schritts (1) bis zu Beginnen des Schritts (2) gehalten wird,
die Klebstoffzusammensetzungen jeweils einen Siliciumklebstoff enthalten und
das poröse Polytetrafluorethylenfoliensubstrat (2) einen durchschnittlichen Porendurchmesser von 0,1 bis 3 µm, eine Dicke von 10 bis 100 µm und eine Porosität von 40 bis 99 % aufweist.

2. Herstellungsverfahren nach Anspruch 1, wobei der Schritt (4) ferner den folgenden Schritt (4C) umfasst:
(4C) den Schritt des Bondierens eines zweiten Trennpapiers (4') auf die zweite Klebstoffschicht (3').

3. Herstellungsverfahren nach irgendeinem der Ansprüche 1 bis 2, wobei die Erhitzungstemperatur in Schritt (3) 130 °C oder mehr beträgt.

4. Herstellungsverfahren nach irgendeinem der Ansprüche 1 bis 3, wobei jede von der ersten Klebstoffschicht (3) und der zweiten Klebstoffschicht (3') eine Dicke von 20 bis150 µm aufweist.

## Revendications

1. Procédé pour produire une bande adhésive double face ayant un substrat en film poreux de polytétrafluoroéthylène et des couches adhésives formées respectivement sur les deux côtés du substrat, le procédé étant **caractérisé en ce qu'**il comprend les étapes (1) à (4) suivantes dans l'ordre :
(1) une étape consistant à placer une composition adhésive sur une première doublure antiadhésive (4) ;
(2) une étape consistant à coller la première doublure antiadhésive (4) sur laquelle la composition adhésive a été placée à une surface principale du substrat en film poreux de polytétrafluoroéthylène (2) ;
(3) une étape consistant à former une première couche adhésive (3) en chauffant le substrat auquel la première doublure antiadhésive (4) a été collée ; et
(4) une étape consistant à disposer une deuxième couche adhésive (3') sur une autre surface principale du substrat (2), une partie d'un adhésif dans la deuxième couche adhésive (3') pénétrant dans le substrat (2), laquelle étape (4) comprend les étapes (4A) et (4B) suivantes :
(4A) une étape consistant à placer une composition adhésive sur l'autre surface principale du substrat (2) ; et
(4B) une étape consistant à former la deuxième couche adhésive (3') en chauffant le substrat (2) sur lequel la composition adhésive a été placée,
dans lequel la composition adhésive placée sur la première doublure antiadhésive (4) est maintenue dans un état non séché depuis la fin de l'étape (1) jusqu'au début de l'étape (2),
chacune des compositions adhésives contient un adhésif siliconé, et
le substrat en film poreux de polytétrafluoroéthylène (2) a un diamètre de pores moyen de 0,1 à 3 µm, une épaisseur de 10 à 100 µm, et une porosité de 40 à 99 %.

2. Procédé de production selon la revendication 1, dans lequel l'étape (4) comprend en outre l'étape (4C) suivante :
(4C) une étape consistant à coller une deuxième doublure antiadhésive (4') à la deuxième couche adhésive (3').

3. Procédé de production selon l'une quelconque des revendications 1 et 2, dans lequel la température de chauffage dans l'étape (3) est de 130 °C ou plus.

4. Procédé de production selon l'une quelconque des revendications 1 à 3, dans lequel chacune parmi la première couche adhésive (3) et la deuxième couche adhésive (3') a une épaisseur de 20 à 150 µm.
